# EUROPÄISCHE PATENTANMELDUNG

(11) **EP 1 116 817 A2**
(43) Veröffentlichungstag der Anmeldung: **18.07.2001**
(21) Anmeldenummer: 00121541.7
(22) Anmeldetag: 30.09.2000
(51) Int. Cl.: D21F 1/00

(54) **Verfahren zur Herstellung eines Entwässerungsbandes**

(30) Priorität: 30.11.1999 DE 19957617
(71) Anmelder: Voith Paper Patent GmbH, 89522 Heidenheim (DE)
(72) Erfinder: Grabscheid, Joachim, Dr., 89547 Gerstetten (DE); Matuschczyk, Uwe, 73312 Geislingen (DE); Schmidt-Rohr, Volker, 89522 Heidenheim (DE)

(57) **Zusammenfassung**

Bei einem Verfahren zur Herstellung eines endlosen, auf einer Seite mit einer Noppenstruktur 12 versehenen Entwässerungsbandes 14 zur Verwendung im Entwässerungsbereich, insbesondere Formierbereich, einer Maschine zur Herstellung einer Faserstoffbahn wie insbesondere einer Papier-, Karton-, Tissue- und/oder Vliesbahn wird das Entwässerungsband 14 aus einem Matrixmaterial 20 gebildet und die Noppenstruktur 12 durch ein Gieß- oder Prägeband 10 in das Matrixmaterial 20 eingebracht, das auf seiner das Matrixmaterial 20 beaufschlagenden Seite mit einer Vielzahl von einzelnen Vertiefungen 16 versehen ist, in denen jeweils wenigstens ein noppenerhöhendes Element 18 positioniert ist, das in das Matrixmaterial 20 eindringt und nach dem Ablaufen des Gieß- oder Prägebandes 10 in dem herzustellenden Entwässerungsband 14 verbleibt. Es wird auch ein entsprechendes Gieß- oder Prägeband 10 und Verwendung eines endlosen, auf einer Seite mit einer Noppenstruktur 12 versehenen Entwässerungsbandes 14 beschrieben.

## Beschreibung

Die Erfindung betrifft ein Verfahren zur Herstellung eines endlosen, auf einer Seite mit einer Noppenstruktur versehenen Entwässerungsbandes zur Verwendung im Entwässerungsbereich, insbesondere Formierbereich, einer Maschine zur Herstellung einer Faserstoffbahn wie insbesondere einer Papier-, Karton-, Tissueund/oder Vliesbahn. Sie betrifft ferner ein Gieß- oder Prägeband gemäß dem Oberbegriff des Anspruchs 10.

Im Formierbereich werden auf der von der Suspension abgewandten Seite der Siebe Bänder eingesetzt, die mit den Sieben umlaufen, wodurch der durch stationäre Elemente wie Leisten, Foils usw. verursachte Siebverschleiß vermieden werden soll.

Als Entwässerungsbänder wurden bereits sogenannte Entwässerungsmatratzen vorgeschlagen, die auf einer Seite mit einer eine geringe Biegesteifigkeit mit sich bringenden Noppenstruktur versehen sind. Durch das geforderte große offene Speichervolumen ergeben sich sehr hohe, schlanke Noppen. Bestehen die Noppen aus dem für das Grundband verwendeten Matrixwerkstoff (z.B. Elastomer), so besitzen sie eine geringe Steifigkeit. Aufgrund der Belastung durch den Siebdruck und die Umfangskraft für den Bandantrieb besteht die Gefahr einer Knickung.

Es wurden bereits Entwässerungsbänder vorgeschlagen, deren Noppen durch sogenannte "Spikes" erzeugt bzw. erhöht werden. Die Spikes bestehen aus einem Material mit deutlich höherem E-Modul als das Matrixmaterial des Grundbandes (z.B. Kunststoff oder Metall).

Ziel der Erfindung ist es, ein Verfahren sowie ein Gieß- oder Prägeband der eingangs genannten Art zu schaffen, die insbesondere zur Herstellung von Entwässerungsbändern mit erhöhten Noppen geeignet sind.

Diese Aufgabe wird hinsichtlich des Verfahrens erfindungsgemäß dadurch gelöst, daß das Entwässerungsband aus einem Matrixmaterial gebildet und die Noppenstruktur durch ein Gieß- oder Prägeband in das Matrixmaterial eingebracht wird, das auf seiner das Matrixmaterial beaufschlagenden Seite mit einer Vielzahl von einzelnen Vertiefungen versehen ist, in denen jeweils wenigstens ein noppenerhöhendes Element positioniert ist, das in das Matrixmaterial eindringt und nach dem Ablaufen des Gieß- oder Prägebandes in dem herzustellenden Entwässerungsband verbleibt.

Mit diesem Verfahren können auf wirtschaftliche und zuverlässige Weise Entwässerungsbänder mit erhöhten Noppen und entsprechend hohem Wasserspeichervolumen hergestellt werden. Bei den noppenerhöhenden Elementen kann es sich beispielsweise um sogenannte Spikes handeln. Die noppenerhöhenden Elemente können beispielsweise aus Kunststoff oder Metall bestehen.

Gemäß einer vorteilhaften Ausgestaltung des erfindungsgemäßen Verfahrens wird ein Gieß- oder Prägeband verwendet, dessen Vertiefungen zur vom Matrixmaterial abgewandten Bandseite hin entlüftet sind. Damit ist sichergestellt, daß das Matrixmaterial des herzustellenden Entwässerungsbandes problemlos in die Vertiefungen eindringen kann.
Die Vertiefungen des Gieß- oder Prägebandes können insbesondere napfartig ausgeführt sein.

Zur Erzielung einer regelmäßigen Noppenstruktur sind die Vertiefungen vorzugsweise regelmäßig angeordnet.

Bei einer bevorzugten praktischen Ausgestaltung wird das Matrixmaterial über eine Trommel geführt und in einem Bereich, in dem es die Trommel umschlingt, vom Gieß- oder Prägeband beaufschlagt.

In bestimmten Fällen ist es von Vorteil, wenn das Entwässerungsband im Gießverfahren hergestellt wird und die noppenerhöhenden Elemente in das Matrixmaterial eingegossen werden.

Eine vorteilhafte alternative Ausgestaltung des erfindungsgemäßen Verfahrens zeichnet sich dadurch aus, daß aus einem thermoplastischen Matrixmaterial ein Basisband erzeugt wird, daß das Basisband erwärmt wird, daß die Noppenstruktur durch einen Prägevorgang in das erwärmte Basisband eingebracht wird und daß die noppenerhöhenden Elemente in das erwärmte Basisband eingeschmolzen werden.

Das Gieß- oder Prägeband wird vorzugsweise erst dann wieder von dem Matrixmaterial getrennt, wenn dieses zumindest im wesentlichen erstarrt bzw. wieder abgekühlt ist.

Das erfindungsgemäße Gieß- oder Prägeband ist dadurch gekennzeichnet, daß es auf einer Seite mit einer Vielzahl von einzelnen Vertiefungen versehen ist, in denen jeweils wenigstens ein noppenerhöhendes Element lösbar positioniert ist, das in das für das Entwässerungsband verwendete Matrixmaterial eindringt und nach dem Ablaufen des Gieß- oder Prägebandes in dem herzustellenden Entwässerungsband verbleibt.

In den Unteransprüchen sind weitere vorteilhafte Ausführungsformen des erfindungsgemäßen Gieß- oder Prägebandes angegeben.

In weiterer Ausgestaltung der Erfindung wird ein endloses, auf einer Seite mit einer Noppenstruktur versehenes Entwässerungsband im Entwässerungsbereich, insbesondere Formierbereich, einer Maschine zur Herstellung einer Faserstoffbahn, wie insbesondere einer Papier-, Karton-, Tissue- und/oder Vliesbahn, verwendet. Das Entwässerungsband wurde dabei in bevorzugter Weise mit einem Gieß- oder Prägeband nach mindestens einem der Vorrichtungsmerkmale des Gieß- oder Prägebands hergestellt.

Der Entwässerungsbereich der Maschine zur Herstellung einer Faserstoffbahn, wie insbesondere einer Papier-, Karton-, Tissue und/oder Vliesbahn, kann einen Langsiebformer und/oder Hybridformer oder einen Doppelsiebformer (Gapformer) umfassen.

Die Erfindung wird im folgenden anhand eines Ausführungsbeispiels unter Bezugnahme auf die Zeichnung näher erläutert; in dieser zeigen:
- Figur 1: eine schematische Teildarstellung eines über eine Walze geführten Gieß- oder Preßbandes zur Herstellung eines endlosen, auf einer Seite mit einer Noppenstruktur versehenen Entwässerungsbandes;
- Figur 2: eine schematische Teilansicht des napfartige Vertiefungen aufweisenden Gieß- oder Preßbandes, wobei die noppenerhöhenden Elemente weggelassen sind;
- Figur 3: eine schematische Seitenansicht einer möglichen Ausführungsform einer in dem Gieß- oder Preßband vorgesehenen Vertiefung mit eingesetztem noppenerhöhendem Element;
- Figur 4: eine schematische Seitenansicht einer weiteren Ausführungsform einer in dem Gieß- oder Preßband vorgesehenen Vertiefung mit eingesetztem noppenerhöhendem Element;
- Figur 5: eine schematische Draufsicht der in Figur 4 gezeigten Vertiefung; und
- Figur 6: eine schematische Seitenansicht einer weiteren Ausführungsform einer in dem Gieß- oder Preßband vorgesehenen Vertiefung mit eingesetztem noppenerhöhendem Element.

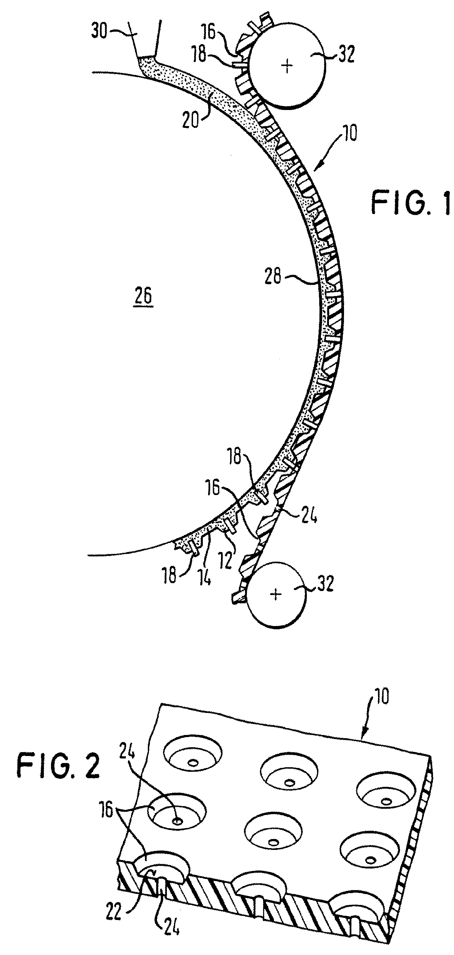

Die Figuren 1 und 2 zeigen ein Gieß- oder Prägeband 10 zur Herstellung eines endlosen, auf einer Seite mit einer Noppenstruktur 12 versehenen Entwässerungsbandes 14, das vorzugsweise im Entwässerungsbereich, insbesondere Formierbereich, einer Maschine zur Herstellung einer Faserstoffbahn wie insbesondere Papier-, Karton-, Tissue- und/oder Vliesbahn verwendbar ist.

Das Gieß- oder Prägeband 10 ist auf einer Seite mit einer Vielzahl von einzelnen Vertiefungen 16 versehen, in denen jeweils ein noppenerhöhendes Element 18 positioniert ist. Bei diesen noppenerhöhenden Elementen 18 kann es sich insbesondere um sogenannte "Spikes" handeln. Die noppenerhöhenden Elemente 18 können beispielsweise aus Kunststoff oder Metall bestehen.

Die noppenerhöhenden Elemente 18 sind lösbar in diesen Vertiefungen 16 positioniert, so daß sie in das für das Entwässerungsband 14 verwendete Matrixmaterial 20 eindringen und nach dem Ablaufen des Gieß- oder Prägebandes 10 in dem herzustellenden Entwässerungsband 14 verbleiben.

Wie anhand der Figur 2 zu erkennen ist, sind die Vertiefungen 16 im vorliegenden Fall napfartig ausgeführt.

Die noppenerhöhenden Elemente 18 sind lösbar im Boden 22 der Vertiefungen 16 positioniert. Im vorliegenden Fall sind sie in Bohrungen 24 eingesetzt, die auf der den Vertiefungen 16 gegenüberliegenden Seite des Gieß- oder Prägebandes 10 münden. Die Vertiefungen 16 können beispielsweise über diese Bohrungen 24 zur von den Vertiefungen 16 abgewandten Bandseite hin entlüftet sein.

Wie anhand der Figur 2 zu erkennen ist, sind die Vertiefungen 16 im vorliegenden Fall regelmäßig angeordnet, so daß sich entsprechend auch eine regelmäßige Noppenstruktur 12 ergibt.

Gemäß Figur 1 wird das Matrixmaterial 20 über eine Trommel 26 geführt und in einem Bereich 28, in dem es die Trommel 26 umschlingt, vom Gieß- oder Prägeband 10 beaufschlagt.

Wird das Entwässerungsband 20 beispielsweise im Gießverfahren hergestellt, so werden die noppenerhöhenden Elemente 18 in das Matrixmaterial 20 eingegossen. Wie anhand der Figur 1 zu erkennen ist, kann in diesem Fall das Matrixmaterial 20 durch eine entsprechende Einrichtung 30 wie insbesondere eine Gießdüse auf die Trommel 26 aufgegeben werden.

Es ist beispielsweise auch möglich, aus einem thermoplastischen Matrixmaterial zunächst ein Basisband zu erzeugen. Dieses Basisband wird dann erwärmt, woraufhin die Noppenstruktur 12 durch einen Prägevorgang in das erwärmte Basisband eingebracht wird und die noppenerhöhenden Elemente 18 in das erwärmte Basisband eingeschmolzen werden.

Wie anhand der Figur 1 zu erkennen ist, wird das Gieß- oder Prägeband 10 erst dann wieder von dem Matrixmaterial 20 getrennt, wenn dieses zumindest im wesentlichen erstarrt bzw. wieder abgekühlt ist.

Das Gieß- oder Prägeband 10 kommt erst nach der Stelle, an der das Matrixmaterial 20 auf die Trommel 26 aufgegeben wird, mit diesem Basismaterial 20 in Berührung. Dazu ist das Preß- oder Prägeband 10 entsprechend über Umlenkwalzen 32 geführt.

Die Trommel 26 kann entsprechend den jeweiligen Anforderungen gekühlt oder beheizt sein.

Insbesondere bei einer Anwendung des Gießverfahrens kann das Entwässerungsband mit einer Gewebeverstärkung hergestellt werden.

Die Noppenstruktur 12 wird demnach durch das Gieß- oder Prägeband 10 in das Matrixmaterial 20 eingebracht, dessen die Vertiefungen 16 aufweisende Negativform auf die Oberfläche des Matrixmaterials 20 übertragen wird. Dabei dringen die lösbar in den Vertiefungen 16 positionierten noppenerhöhenden Elemente 18 in das Matrixmaterial 20 ein, in dem sie nach dem Ablaufen des Gieß- oder Prägebandes 10 verbleiben.

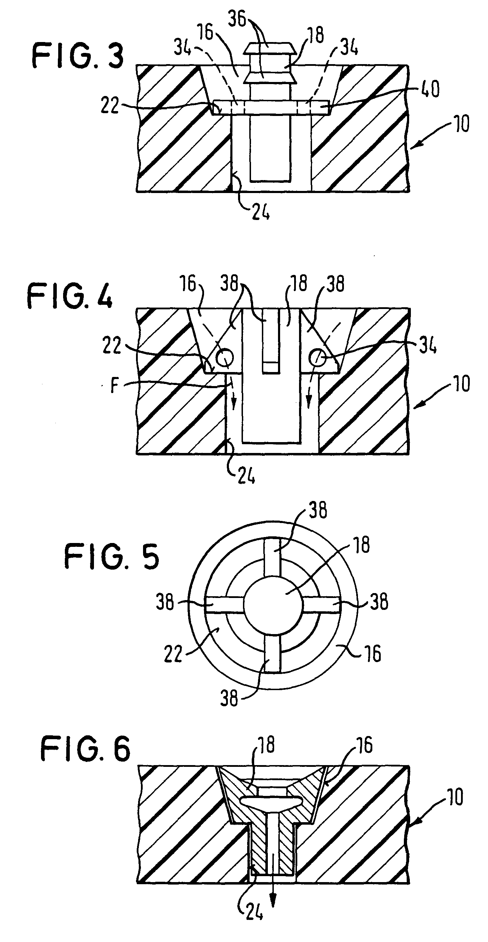

In den Figuren 3 bis 6 sind verschiedene Ausführungsformen von in dem Gießoder Preßband 10 vorgesehenen Vertiefungen 16 mit lösbar eingesetzten noppenerhöhenden Elementen 18 dargestellt.

Bei der Ausführungsform gemäß Figur 3 sind die noppenerhöhenden Elemente 18 jeweils mit einer Art Ringflansch 40 versehen, in dem seitliche Entlüftungsbohrungen 34 vorgesehen sind und über den das betreffende Element 18 auf dem die Bohrung 24 umschließenden Bodenrand 22 der Vertiefung 16 aufliegt. Mit seinem unteren Ende ragt das noppenerhöhende Element 18 in die Bohrung 24. Die Entlüftungsbohrungen 34 münden in die Bohrung 24, wodurch die Entlüftung zur gegenüberliegenden Seite hin sichergestellt ist.

Die noppenerhöhenden Elemente 18 können mit Rückhalteabschnitten 36 versehen sein, die einer sicheren Verankerung der noppenerhöhenden Elemente 18 in dem Matrixmaterial 20 dienen. Die Verankerung der noppenerhöhenden Elemente 18 in dem Matrixmaterial 20 erfolgt also insbesondere durch Formschluß, während deren Sicherung im Gieß- oder Prägeband 10 vorzugsweise mittels einer Klemmung in Form einer Preßpassung erfolgt.

Bei der Ausführungsform gemäß Figur 4 ist ein jeweiliges noppenerhöhendes Element 18 mit mehreren, hier vier seitlichen Flügeln 38 versehen, die ebenfalls einer sicheren Verankerung der noppenerhöhenden Elemente 18 in dem Matrixmaterial 20 dienen. Auch in diesem Fall erfolgt, wie durch die Pfeile F angedeutet, die Entlüftung zur gegenüberliegenden Seite hin wieder über eine Bohrung 24.

Im vorliegenden Fall liegt das jeweilige noppenerhöhende Element 18 über die Flügel 38 auf dem die Bohrung 24 umschließenden Bodenrand 22 der Vertiefung 16 auf. Auch hier ragt das Element 18 mit seinem unteren Ende wieder in die Bohrung 24.

Figur 6 zeigt in schematischer Seitenansicht eine weitere Ausführungsform einer Vertiefung 16 mit eingesetztem noppenerhöhendem Element 18. Auch in diesem Fall ist über eine Bohrung 24 wieder eine Entlüftung der Vertiefung 16 zur Rückseite hin gewährleistet.

Das endlose, auf einer Seite mit einer Noppenstruktur 12 versehene Entwässerungsband 14 kann auch im Entwässerungsbereich, insbesondere Formierbereich, einer Maschine zur Herstellung einer Faserstoffbahn, wie insbesondere einer Papier-, Karton-, Tissue- und/oder Vliesbahn, verwendet werden. Das Entwässerungsband 14 wurde dabei in bevorzugter Weise mit einem Gieß- oder Prägeband 10 nach mindestens einem der Vorrichtungsmerkmale des Gieß- oder Prägebands 10 hergestellt.

Der Entwässerungsbereich der Maschine zur Herstellung einer Faserstoffbahn, wie insbesondere einer Papier-, Karton-, Tissue und/oder Vliesbahn, kann einen Langsiebformer und/oder Hybridformer oder einen Doppelsiebformer (Gapformer) umfassen.

### Bezugszeichenliste

- 10: Gieß- oder Prägeband
- 12: Noppenstruktur
- 14: Entwässerungsband
- 16: Vertiefung
- 18: Noppenerhöhendes Element, Spike
- 20: Matrixmaterial
- 22: Boden
- 24: Bohrung
- 26: Trommel
- 28: Umschlingungsbereich
- 30: Aufgabeeinrichtung
- 32: Umlenkwalze
- 34: Entlüftungsbohrung
- 36: Rückhalteabschnitt
- 38: Flügel
- 40: Ringflansch

## Patentansprüche

1. Verfahren zur Herstellung eines endlosen, auf einer Seite mit einer Noppenstruktur (12) versehenen Entwässerungsbandes (14) zur Verwendung im Entwässerungsbereich, insbesondere Formierbereich, einer Maschine zur Herstellung einer Faserstoffbahn wie insbesondere einer Papier-, Karton-, Tissue- und/oder Vliesbahn,
**dadurch gekennzeichnet**,
daß das Entwässerungsband (14) aus einem Matrixmaterial (20) gebildet und die Noppenstruktur (12) durch ein Gieß- oder Prägeband (10) in das Matrixmaterial (20) eingebracht wird, das auf seiner das Matrixmaterial (20) beaufschlagenden Seite mit einer Vielzahl von einzelnen Vertiefungen (16) versehen ist, in denen jeweils wenigstens ein noppenerhöhendes Element (18) positioniert ist, das in das Matrixmaterial (20) eindringt und nach dem Ablaufen des Gieß- oder Prägebandes (10) in dem herzustellenden Entwässerungsband (14) verbleibt.

2. Verfahren nach Anspruch 1,
**dadurch gekennzeichnet**,
daß ein Gieß- oder Prägeband (10) verwendet wird, dessen Vertiefungen (16) zur vom Matrixmaterial (20) abgewandten Bandseite hin entlüftet sind.

3. Verfahren nach Anspruch 1 oder 2,
**dadurch gekennzeichnet**,
daß ein Gieß- oder Prägeband (10) verwendet wird, bei dem die noppenerhöhenden Elemente (18) im Boden (22) der Vertiefungen (16) positioniert sind.

4. Verfahren nach einem der vorhergehenden Ansprüche,
**dadurch gekennzeichnet**,
daß ein Gieß- oder Prägeband (10) verwendet wird, dessen Vertiefungen (16) napfartig ausgeführt sind.

5. Verfahren nach einem der vorhergehenden Ansprüche,
**dadurch gekennzeichnet**,
daß ein Gieß- oder Prägeband (10) verwendet wird, bei dem die Vertiefungen (16) regelmäßig angeordnet sind.

6. Verfahren nach einem der vorhergehenden Ansprüche,
**dadurch gekennzeichnet**,
daß das Matrixmaterial (20) über eine Trommel (26) geführt und in einem Bereich (28), in dem es die Trommel (26) umschlingt, vom Gieß- oder Prägeband (10) beaufschlagt wird.

7. Verfahren nach einem der vorhergehenden Ansprüche,
**dadurch gekennzeichnet,**
daß das Entwässerungsband (14) im Gießverfahren hergestellt wird und die noppenerhöhenden Elemente (18) in das Matrixmaterial (20) eingegossen werden.

8. Verfahren nach einem Ansprüche 1 bis 6,
**dadurch gekennzeichnet**,
daß aus einem thermoplastisches Matrixmaterial ein Basisband erzeugt wird, daß das Basisband erwärmt wird, daß die Noppenstruktur (12) durch einen Prägevorgang in das erwärmte Basisband eingebracht wird und
daß die noppenerhöhenden Elemente (18) in das erwärmte Basisband eingeschmolzen werden.

9. Verfahren nach einem der vorhergehenden Ansprüche,
**dadurch gekennzeichnet**,
daß das Gieß- oder Prägeband (10) erst dann wieder von dem Matrixmaterial (20) getrennt wird, wenn dieses zumindest im wesentlichen erstarrt bzw. wieder abgekühlt ist.

10. Gieß- oder Prägeband (10) zur Herstellung eines endlosen, auf einer Seite mit einer Noppenstruktur (12) versehenen Entwässerungsbandes (14) zur Verwendung im Entwässerungsbereich, insbesondere Formierbereich, einer Maschine zur Herstellung einer Faserstoffbahn, wie insbesondere einer Papier-, Karton-, Tissue- und/oder Vliesbahn, insbesondere zur Durchführung des Verfahrens nach einem der vorhergehenden Ansprüche,
**dadurch gekennzeichnet**,
daß es auf einer Seite mit einer Vielzahl von einzelnen Vertiefungen (16) versehen ist, in denen jeweils wenigstens ein noppenerhöhendes Element (18) lösbar positioniert ist, das in das für das Entwässerungsband (14) verwendete Matrixmaterial (20) eindringt und nach dem Ablaufen des Gieß- oder Prägebandes (10) in dem herzustellenden Entwässerungsband (14) verbleibt.

11. Gieß- oder Prägeband (10) nach Anspruch 10,
**dadurch gekennzeichnet**,
daß die Vertiefungen (16) zur vom Matrixmaterial (20) abgewandten Bandseite hin entlüftet sind.

12. Gieß- oder Prägeband (10) nach Anspruch 10 oder 11,
**dadurch gekennzeichnet,**
daß die noppenerhöhenden Elemente (18) im Boden (22) der Vertiefungen (16) positioniert sind.

13. Gieß- oder Prägeband (10) nach einem der vorhergehenden Ansprüche,
**dadurch gekennzeichnet**,
daß die Vertiefungen (16) napfartig ausgeführt sind.

14. Gieß- oder Prägeband (10) nach einem der vorhergehenden Ansprüche,
**dadurch gekennzeichnet,**
daß die Vertiefungen (16) regelmäßig angeordnet sind.

15. Verwendung eines endlosen, auf einer Seite mit einer Noppenstruktur (12) versehenen Entwässerungsbandes (14) im Entwässerungsbereich, insbesondere Formierbereich, einer Maschine zur Herstellung einer Faserstoffbahn, wie insbesondere einer Papier-, Karton-, Tissue- und/oder Vliesbahn.

16. Verwendung eines endlosen, auf einer Seite mit einer Noppenstruktur (12) versehenen Entwässerungsbandes (14) nach Anspruch 15,
**dadurch gekennzeichnet,**
daß das Entwässerungsband (15) mit einem Gieß- oder Prägeband (10) nach mindestens einem der Ansprüche 10 bis 14 hergestellt wurde.

17. Verwendung eines endlosen, auf einer Seite mit einer Noppenstruktur (12) versehenen Entwässerungsbandes (14) nach Anspruch 15 oder 16,
**dadurch gekennzeichnet,**
daß der Entwässerungsbereich einen Langsiebformer und/oder Hybridformer umfaßt.

18. Verwendung eines endlosen, auf einer Seite mit einer Noppenstruktur (12) versehenen Entwässerungsbandes (14) nach Anspruch 15 oder 16,
**dadurch gekennzeichnet,**
daß der Entwässerungsbereich einen Doppelsiebformer (Gapformer) umfaßt.
